# EUROPEAN PATENT SPECIFICATION

(11) **EP 2 454 068 B1**
(45) Date of publication and mention of the grant of the patent: **04.06.2014**
(21) Application number: 09796064.5
(22) Date of filing: 27.10.2009
(51) Int. Cl.: B29C 33/44, B29C 33/48, B29C 45/44

(54) **A MOULD FOR THE INJECTION MOULDING OF ELEMENTS WITH UNDERCUTS MADE OF PLASTIC MATERIAL, WITH AN INTEGRATED EJECTION SYSTEM**
FROMWERKZEUG ZUM SPRITZGIESSEN VON PLASTIKTEILEN MIT HINTERSCHEIDUNGEN MIT INTEGRIERTER AUSWERFVORRICHTUNG
MOULAGE D'INJECTION POUR ELEMENTE EN MATIÉRE PLASTIQUE AVEC CONTRE-DÉPOUILLE ET UNE SYSTÈME D'ÉJECTION INTEGRÉE

(30) Priority: 17.07.2009 IT TO20090541
(43) Date of publication of application: 23.05.2012
(73) Proprietor: Cast Meccanica S.r.l., 10090 Rivoli (TO) (IT)
(72) Inventor: TABERNA, Claudio, I-10090 Villarbasse (TO) (IT)
(74) Representative: Robba, Pierpaolo
(86) International application number: PCT/IB2009/054747
(87) International publication number: WO 2011/007212

(56) References cited:
- EP-A1- 0 095 224
- DE-U1- 9 414 523
- JP-A- 58 134 726
- JP-A- 61 035 924
- US-A- 4 832 307

## Description

### Technical Field

The present invention refers to a mould for the injection moulding of elements made of plastic material.

More precisely, the present invention refers to a mould for the injection moulding of vehicles bodywork portions made of plastic material.

Even more precisely, the present invention refers to a mould for the injection moulding of bumpers made of plastic material.

The present invention also refers to a moulding apparatus comprising the aforesaid mould.

### Background Art

### Background Art

The use of components made of plastics through injection moulding is very widespread, particularly in the automotive sector.

The injection moulding is commonly carried out inside apparatuses comprising a mould consisting of a puncher and of a matrix, movable relative to each other, having surfaces shaped so as to form, when coupled, a cavity having the shape of the piece to be moulded. These two elements, puncher and matrix, are connected to the corresponding bottom plates, plane and mutually parallel, that, in turn, are connected to a manufacturing press; depending on the press operative needs, the mould can be vertically or horizontally arranged with respect to the press moulding axis that, in turn, can be horizontal or vertical, preferably horizontal, with respect to the press ground support surface.

A removal system is further provided to allow the removal of the moulded piece, said removal system being movable and equipped with numerous and complex handling components for the moulded piece.

An example of an injection moulding apparatus according to the above-mentioned known art is that described in the Italian Patent application No. MI2005A001979; in particular, this apparatus is provided with a ring-closed removal system, arranged around the puncher and movable with respect to both the corresponding bottom plate and the puncher itself.

The aforesaid kind of apparatuses has the drawback to provide a closed structure, hardly inspectable and maintainable.

Moreover, the aforesaid kind of apparatuses has the drawback to provide slidings of the removal system with respect to the puncher and among the movable parts of the puncher itself, which can cause seizings and resulting operation breaks.

Finally, the aforesaid kind of apparatuses has the drawback to provide components that can cause bends due to the injection pressure and, consequently, create defects in the moulded piece; an example of said components is represented, in the specific case of the above-mentioned application, by a closed frame interposed between the movable parts and the puncher, while, more generally, by inclined columns that, resting on the bottom plate, allow the movement of the movable parts and are significantly bending stressed.

Documents JP 61-035924, EP 95 224, US 4 832 307, DE 94 14 523 U and JP 58 134 726 all disclose moulds for injection moulding for the production of undercut articles comprising a male mould or puncher, a female mould or matrix and a removal system for ejecting the moulded article.

In a continuously developing industrial sector, it is necessary to guarantee the apparatuses operation continuity and the process times reduction, to allow easy and quick maintenance actions, to assure the system stiffness and the required quality levels.

It appears therefore evident that the need still exists for a solution that, differently from the apparatuses of the known art above illustrated, allows to achieve the aforesaid operative and maintenance performances.

Furthermore, the need exists for a solution that allows to achieve the required quality levels, specifically by automotive industries.

### Disclosure of Invention

### Summary of the Invention

The present invention intends to overcome drawbacks and limits of the solutions of the prior art previously depicted and to meet the still unsatisfied need for a solution that allows to achieve better operative and maintenance performances as well as the required optimum quality levels, specifically by automotive industries.

This object is achieved with the mould, and with the relevant apparatus, for the moulding of elements, particularly of vehicles bodywork portions, more particularly of bumpers, made of plastic material according to the invention that, by advantageously providing a mould with an innovative removal system, allows to achieve better operative and maintenance performances as well as the required optimum quality levels, specifically by automotive industries.

More precisely, the mould for moulding according to the invention comprises a puncher, a matrix and a removal system, and it is characterised in that said removal system comprises internal transversal bars and external longitudinal bars conveniently assembled and connected to each other so as to form a single and stiff, but not closed, body, which is able to guarantee the handling of the moulded piece.

In this way, the mould, and the relevant apparatus, for moulding according to the invention assures the reduction of moulding times because of more compact sizes and limited handling strokes, the reduction of the mould maintenance costs as a result of the visibility of the areas subjected to wear and an optimum aesthetic quality of the manufactured products, especially after painting, thanks to the stiffness of the removal system structure.

### Brief Description of the Drawings

The following figures, given by way of non limiting example, help to illustrate the present invention, a preferred embodiment of which will be afterwards described in detail:
- FIG. 1 is a longitudinal section view of the moulding apparatus according to the invention;
- FIG. 2 is an enlarged detail of FIG. 1;
- FIG. 3 is a view along section A-A of FIG. 2;
- FIG. 4 is a transversal section view of the moulding apparatus according to the invention;
- FIG. 5 is a top plan view of the removal system of the mould according to the invention;
- FIG. 6 is a perspective view of the removal system of the mould according to the invention;
- FIG. 7 is a perspective view of an enlarged detail of an example of removal system of the mould not part of the invention, in which a first variant of the support of said removal system is represented;
- FIG. 8 is an enlarged detail of FIG. 7 showing a second variant of the support of the removal system;
- FIG. 9 is a flow diagram illustrating in detail the main operation steps of the moulding apparatus according to the invention;
- FIG. 10 is an exploded perspective view of an enlarged detail of the moulding apparatus according to the invention in a specific application;
- FIG. 11 is a perspective view of an element made of plastic material obtained with the moulding apparatus according to the invention.

### Detailed description of a Preferred Embodiment

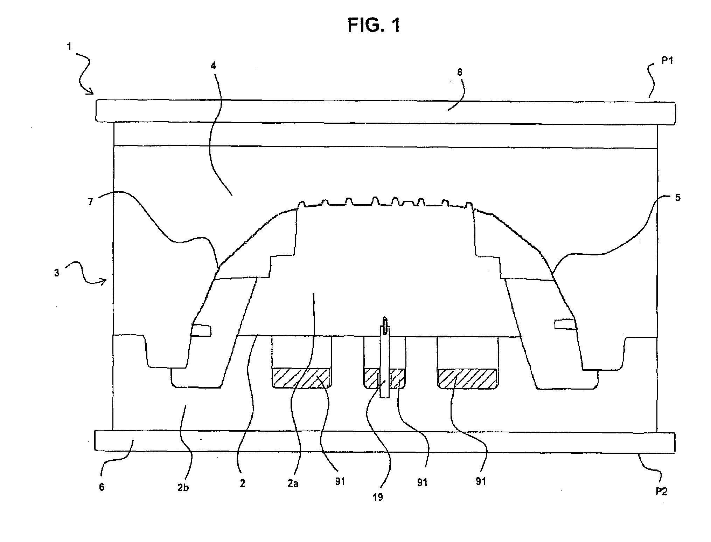

With reference to FIG. 1, it is to be noticed that the moulding apparatus 1 according to the invention comprises a mould 3 comprising a puncher 2, consisting of an upper portion, or puncher as properly said, 2a and of a lower portion, or puncher-holder, 2b, and of a matrix 4.

Said puncher 2 and said matrix 4 have surfaces shaped so as to form, when coupled, a cavity 5 having the shape of the element to be moulded, hereinafter moulded element, 7 and into which the melted plastic material will be injected under pressure.

Said puncher 2 and said matrix 4 are connected to corresponding puncher bottom plate 6 and matrix bottom plate 8, respectively, plane and mutually parallel, said bottom plates being connected, in turn, to a manufacturing press of the known type (not shown); depending on the press operative needs, the mould 3 can be vertically or horizontally arranged with respect to the press moulding axis that, in turn, can be horizontal or vertical, preferably horizontal, with respect to the press ground support surface.

The closing and opening movements of the mould 3, and consequently the approach and separation movements of said puncher 2 and of said matrix 4, are guided by said press; depending on the kind of chosen press, said puncher 2 and said matrix 4 can be movable relative to each other, or only said puncher 2 or only said matrix 4 can move, the other one, i.e. the matrix 4 or the puncher 2, respectively, keeping the rest position.

As mentioned above, said puncher 2 consists of two portions and said puncher as properly said 2a is supported by said puncher-holder 2b that is fastened to the puncher bottom plate 6; on the contrary, said matrix 4 is directly fastened to the matrix bottom plate 8.

Said puncher bottom plate 6 and said matrix bottom plate 8 rest on corresponding press surfaces and define reference press-planes P1 and P2, respectively.

Depending on the kind of chosen press, the press-planes P1 and P2 can be reciprocally movable but, preferably the matrix press-plane P1 keeps still while the puncher press-plane P2 moves along the direction of the moulding axis, which can be horizontal or vertical, preferably horizontal, with respect to the press ground support surface.

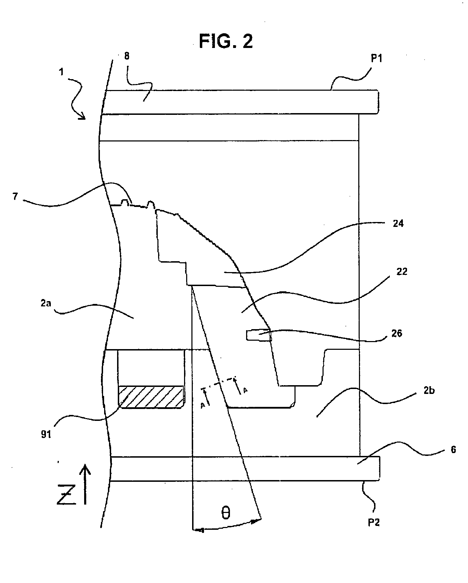

With reference to FIG. 2, it is to be noticed that inside the puncher as properly said 2a there are movable parts such as, in particular, insertions in the central part of the puncher, ore movable slices, 22 and one or more insertions superimposed and/or laterally arranged relative to the slices, or upper sliders, 24; furthermore, there is an insertion, or pusher, 26 that, thanks to its high thermal conductivity, releases heat and cooperates to the uniform cooling of the piece, which is an important condition to avoid deformation of the plastic material and superficial defects.

It is important to point out that, according to the present invention, said movable slices 22 directly rest on the puncher 2, specifically on the puncher-holder 2b.

The side of the body of the puncher 2 has an inclination of an angle θ, whose value preferably ranges between 10° and 20°, with respect to the moulding direction Z, which is also the direction of closing and opening of the mould 3.

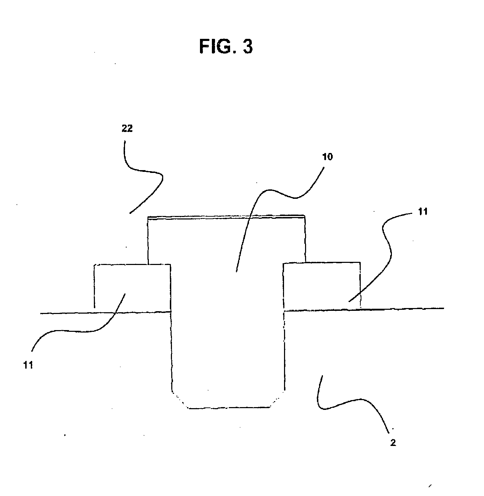

In order to slide during opening and closing of the mould 3, the movable slices 22 are connected to the inclined side of the puncher 2 through first T-guides 10, as shown in FIG. 3; also during the removal of the moulded piece 7, the movable slices 22 slide on the first T-guides 10 moving back relative to the puncher 2.

It is important to point out that said first T-guides 10, provided in the present invention unlike the known art solutions, solve the problem of the bends to which the inclined columns resting on the bottom plate are subjected.

Said first T-guides 10, preferably made of bronze, are fastened to the puncher 2 by known methods and are able to slide in appropriate corresponding seats obtained in the slices 22.

In order to facilitate the adjusting of the movable slices 22, said first T-guides 10 are not directly placed in contact with the puncher 2, but first small plates 11 are provided, made of cemented and tempered steel and positioned between the first T-guides 10 and the puncher 2.

The first T-guides 10 are inclined at an angle lower of 0° and 5°, preferably of 1°, than the angle θ of the side of the puncher 2.

The moulding apparatus 1 further comprises a removal system 9 to remove the moulded piece 7 from the mould 3; said removal system 9 is supported by the puncher-holder 2b and it is movable relative to the puncher 2.

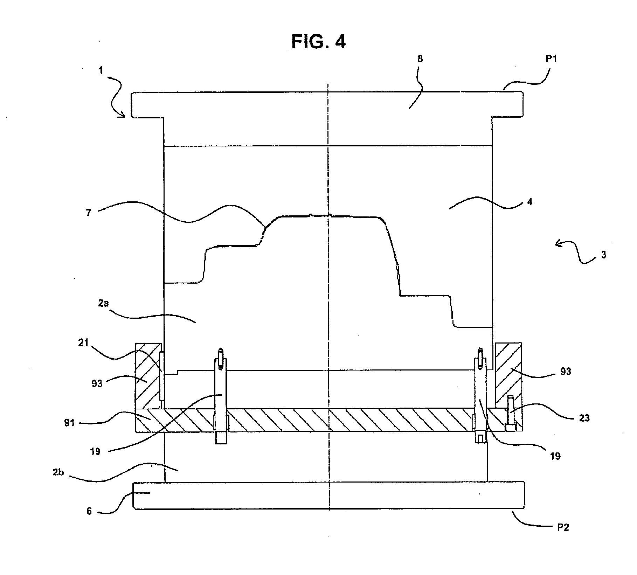

Making reference to FIG. 4, it is to be noticed that said removal system comprises internal transversal bars 91 (also visible in FIGG. 1 and 2) and external longitudinal bars 93.

Always with reference to FIG. 4, it is to be noticed that the apparatus 1 further comprises one or more guide columns 19 (also visible in FIG. 1) required for centring and guiding said removal system 9 during its stroke, second small plates 21, also made of cemented and tempered steel, resting on the puncher 2, and screws 23 connecting said internal transversal bars 91 and said external longitudinal bars 93.

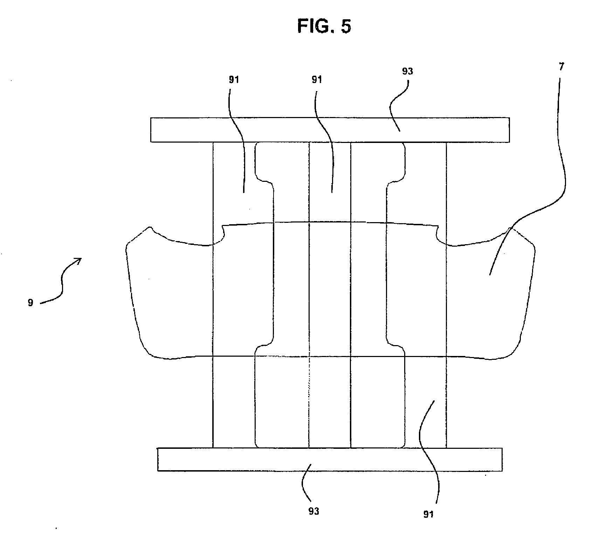

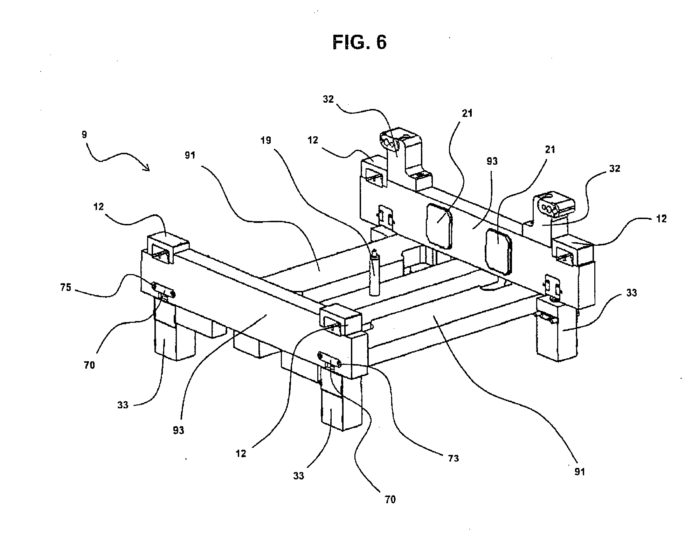

Said removal system 9, which is the innovative component compared with the known art solutions, will be now disclosed in detail by making reference to FIGG. 5 and 6.

Said internal transversal bars 91 and said external longitudinal bars 93 are conveniently assembled and connected to each other, for instance through screws 23 or other known means such as fastening allen screws and centring pins, so as to form a single and stiff body, which is open; said internal transversal bars 91 and said external longitudinal bars 93 guarantee the handling of the moulded element 7, as will be illustrated afterwards.

Preferably, said internal transversal bars 91 and said external longitudinal bars 93 are made of high-strength steel.

The sizing of the bending-resistant section of the external longitudinal bars 93 is of particular importance, said external longitudinal bars 93 being stressed by the weight of the whole apparatus as well as by the friction due to the slidings of the movable parts, specifically of the movable slices 22 and of the upper sliders 24.

The optimum area of the bending-resistant section ranges between 50 cm² and 200 cm², and it is preferably of 100 cm².

As mentioned above, the centring of said external longitudinal bars 93 is guaranteed by one or more, preferably four, guide columns 19 provided with relevant bronze buckles (not shown); said guide columns 19 also act as fixed supports of said external longitudinal bars 93 to support the upper sliders 24, which are not subjected to translations, when this is required depending on the kind of the moulded piece 7.

Said guide columns 19 are preferably made of steel.

With reference to FIGG. 4 and 6 it is to be noticed that, in order to facilitate the sliding of the external longitudinal bars 93, it is necessary to provide said second small plates 21, cemented and tempered, that rest on the puncher-holder 2b and are screwed to the external longitudinal bars 93; said second small plates 21 cooperate with said guide columns 19 to facilitate said sliding particularly when the mould 3 is horizontally arranged.

Again referring to FIG. 6, the movement of the removal system 9 is assured by an array of hydraulic cylinders 33 operating the movable parts 22, 24 inside the upper portion 2a of the puncher 2; as an alternative to or in combination with said hydraulic cylinders, mechanical jumpers can be used.

Said array of hydraulic cylinders 33 consists of one or more, preferably four, units, preferably arranged two by two on the long sides of the apparatus; said four hydraulic cylinders 33, in the illustrated embodiment, are controlled by a system of microswitches interfaced with the manufacturing press but, obviously, other control systems known to the person skilled in the art can be used.

The connection between said cylinders 33 and the removal system 9 is made through a system 70, preferably a fork, that can be removed from the mould 3 by operating proper fastening means 73, for instance screws; other equivalent solutions known to the person skilled in the art can be applied as an alternative to the one chosen for the preferred embodiment herein illustrated.

It is important to point out that the aforesaid arrangement allows to easily access the removal system 9, thus simplifying the maintenance operations.

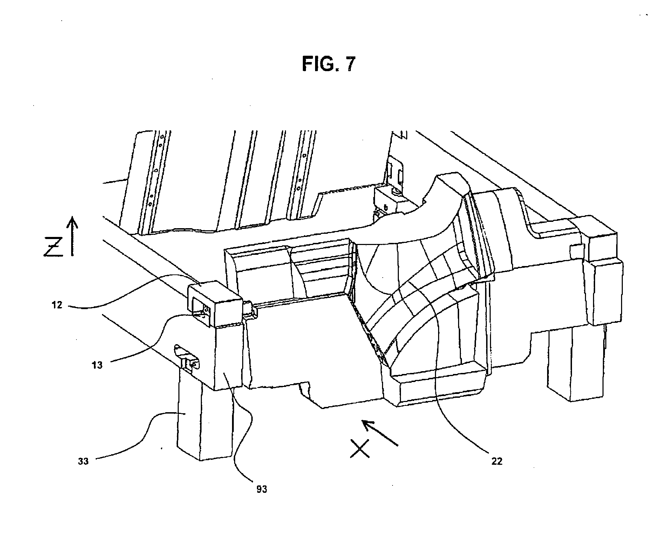

One or more, preferably four, first supports 12, to which the movable slices 22 are connected, are arranged at the ends of the external longitudinal bars 93 (as it is visible in FIG. 7); one or more, preferably four, second supports 32 for the corresponding upper sliders 24 are also provided.

Said first supports 12 and second supports 32 are useful for making the movable parts 22, 24 solidly joined to the removal system 9.

Depending on the requirements of the article to be produced, another example not part of the invention provides two alternative variants as regards the sliding supports 12 of the movable slices 22.

The first variant, visible in FIG. 7, provides that said supports 12 connecting the external longitudinal bars 93 and the movable slice 22 are equipped, on the parts subjected to sliding, with third cemented and tempered small plates 13, which allow the movable slice 22 to rectilinearly slide towards the inside until it reaches the stroke necessary to remove the undercuts preventing the moulded element 7 from being picked-up, i.e. until it comes into contact with the fixed portion of the puncher 2.

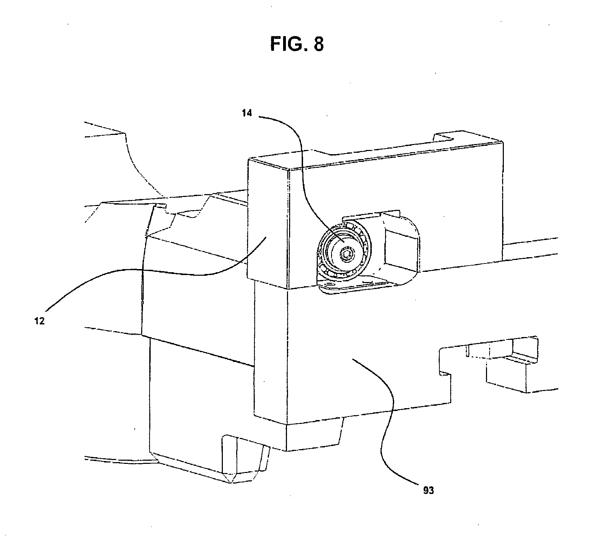

The second variant, visible in FIG. 8, provides that said supports 12 are equipped with bearings 14, which allow the movable slice 12 to slide according to an inclined direction; this version is to be preferred with compound movement directions and heavier movable slices; this variant has the specific advantage of making the motion at the beginning of the removal more uniform and fluid.

These two solutions have an important feature in common with each other, that is the fact that the external longitudinal bars 93, which are subjected to sliding, are arranged in a way visible from the outside, this allowing both to visually monitor the wear thereof and to intervene for their replacement or maintenance without having to disassemble the mould 3.

Again making reference to FIG. 7, it is to be noticed that the translation motion of the movable slices 22 is formed by a component along the Z direction, given by the movement of the removal system 9 that, combined with the inclination of the angle θ preferably variable between 10° and 20° of the sides of the body of the puncher 2, gives a translation along the X direction, allowed by the four supports 12 being present.

More precisely, the shift direction of said movable slices 12 is given by combining the vertical movement of the removal system 9 and the movement of the first T-guides 10 depending on the piece to be moulded 7.

In other words, while the upper sliders 24 move only along the vertical direction, the movable slices 22 can either translate only along the horizontal direction or have a movement with both an horizontal and a vertical component, depending on the moulded piece 7.

As it can be appreciated, the removal system 9 according to the invention has a greater stiffness since the mechanical components are all in contact with one other, without any gap and, in particular, the movable slices 22 are in contact with the puncher 2.

Moreover, contrary to the conventional moulds in which, as previously highlighted, there are inclined columns that, resting on the bottom plate, allow the movement of the movable parts, the present invention does not provide said inclined columns, this allowing to increase the inclination angle, this, in turn, reducing the puncher stroke of about 35-45 %, with an evident positive consequence for the manufacturing times, which are thus reduced.

It is necessary to specify that the removal system 9 according to the present invention is assembled separately and before being inserted between the upper portion 2a and the lower portion 2b of the puncher 2.

More precisely, the assembly of the removal system 9 comprises the steps of:
- positioning the two external longitudinal bars 93,
- arranging the internal transversal bars 91 perpendicularly to the external longitudinal bars 93,
- positioning the guide columns 19 on the internal transversal bars 91,
- controlling the centring of said bars and mutually fastening them with appropriate means,
- assembling the accessory components such as, for instance, the second supports 32, the second small plates 21, the third small plates 13, an so on,
- accommodating the assembly thus obtained onto the puncher 2,
- fastening the cylinders 33 and the first supports 12.

After having assembled all the other components of the moulding apparatus as well as all the required adjustment and control systems, not listed in detail because they are common to the solutions according to the known art, the moulding manufacturing cycle can be started.

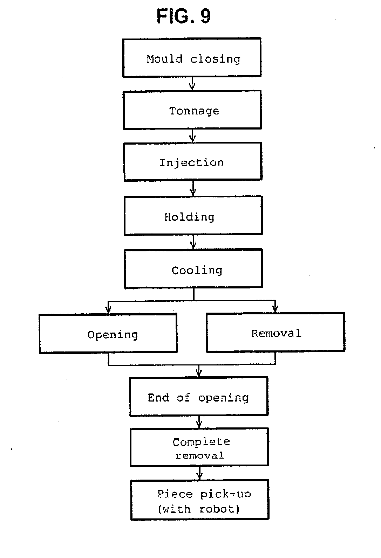

With reference to FIG. 9, the manufacturing cycle of the injection moulded elements 7 made of plastic material is now described.

First of all, puncher 2 and matrix 4 approach to each other until they perfectly adhere to form the cavity 5, that is until the mould 3 is completely closed; depending on the kind of the press, only either the puncher or the matrix will be shifted, or both of them.

Subsequently the tonnage operation is carried out, which essentially consists in adjusting the operative parameters depending on the kind of the piece to be moulded 7.

Then, the injection of the melted plastic material into said cavity 5 can take place, during which injection the mould 3 is closed and the movable slices 22 are lined up with the puncher 2.

Thanks to the used removal system 9, when the mould 3 is closed for injecting the melted plastic material, the movable slices 22 rest on the puncher-holder 2b, thus avoiding the typical structural bendings of the conventional moulds, in which said movable slices are not centrally supported due to the gap between the bottom plate and the puncher.

Once the injection of the plastic material is completed and the steps of both holding and cooling and solidifying the moulded piece 7 are finished, the opening of the mould 3 starts as a result of the opening of the press.

The opening of the mould 3 can take place either previously or simultaneously with the first step of removal of the moulded piece 7.

The opening of the mould 3 takes place simultaneously with the first step of removal of the moulded piece 7 when mould division, that is separation of the matrix and of the puncher, not in evidence on the visible external portion of the moulded piece 7, is needed, that is when, for finishing aesthetic requirements of the moulded piece 7, it is necessary to move back the division point between matrix and puncher.

At the end of the removal, the moulded piece 7 will have to be free from restrainings and ready for the complete removal, for instance through a robotised grasping tool.

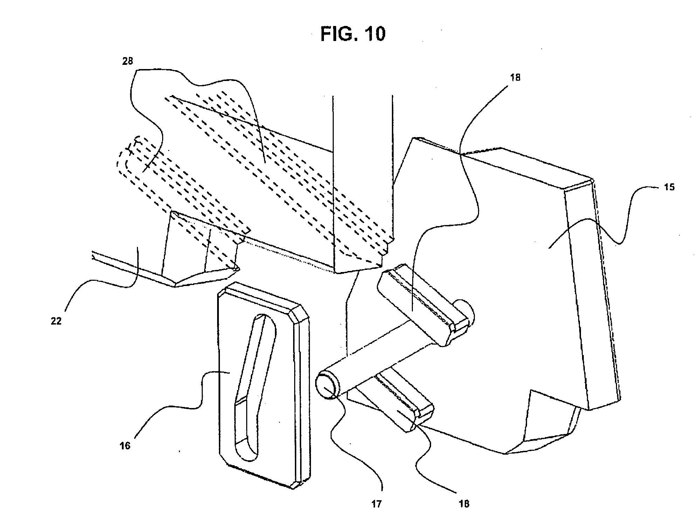

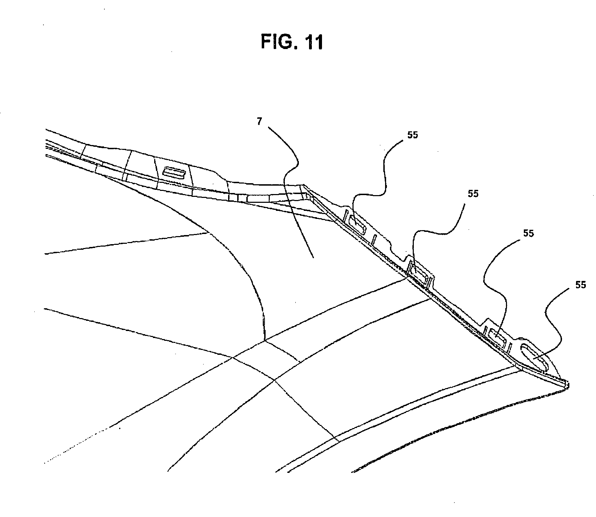

Making now reference to FIGG. 10 and 11, a specific case of the invention application is shown.

The specific application refers to the presence of undercuts 55 in the fastening region between a bumper 7 and the corresponding mudguard (not shown), as illustrated in FIG. 11.

Making reference to FIG. 10, the movable slice 22 comprises a side lifter 15 in the mudguard or side region, depending on whether it is a question of a mould for a front or a rear mudguard, comprising inclined second T-guides 18 allowing to separate and move back the region during the mould opening step as well as permitting the removal of the moulded piece 7; said second T-guides 18 slide inside corresponding seats 28 obtained in the movable slice 22.

Always referring to FIG. 10, the separation movement of said lifter 15 from the movable slice 22 occurs through a cam eyelet 16 inside which a pin 17 slides allowing said lifter 15 to shift along the second T-guides 18 with variable speed depending on the mould kinematisms requirements.

From FIG. 10 it also appears how the T-guides 18 give the movement direction of the side lifter 15, while the translation speed is given by the cam eyelet 16.

The advantages resulting from using the moulding apparatus according to the present invention are evident from the description of a preferred embodiment above depicted in detail; in particular:
- the guarantee of an excellent aesthetic quality of the produced articles, specially after painting, as a consequence of the increased stiffness of the mould;
- the reduction of the moulding times, due to the mould compact sizes as well as to the decrease of the movement strokes;
- the reduction of the wear caused by the sliding of the press mechanical components as a consequence of the provision of a puncher having a reduced weight and a barycentre closer to the reference press-plane;
- the simplification of the maintenance operations and the containment of the relevant costs, thanks to the visibility of the regions subjected to wear;
- the reduction of the realisation times and the saving of material for the mould manufacturing.

It is evident that the moulding apparatus according to the present invention, herein disclosed by means of a preferred embodiment given by way of non limiting example, can be modified according to the features of the dependent claims or those of the description of the present invention; in particular, the opening and closure system of the mould could be devised in a different way, for instance by employing an equipment other than a press, or the supports could be provided with even different systems with respect to those herein illustrated, said arrangements being chosen among the solutions available in the known art depending on the best constructive opportunity.

Moreover, the present invention could be conveniently applied in fields different from the automotive one, properly adjusting the mould to shapes and sizes of elements used in other fields such as, for instance, furnishing, domestic appliances, sports equipment as well as for all those applications providing the manufacturing of components through injection moulding.

## Claims

1. A mould (3) comprising:
- a puncher (2),
- a matrix (4),
said puncher (2) and said matrix (4) being movable close to / away from each other along a moulding direction (Z) so as to close / open said mould (3),
said puncher (2) and said matrix (4) having surfaces shaped so as to form, when coupled, a cavity (5) having the shape of the element to be moulded, hereinafter moulded element, (7), and
- a removal system (9), said removal system being slidable along said moulding direction (Z),
wherein said puncher (2) comprises movable parts including at least insertions in the puncher middle portion or movable slices (22),wherein said removal system (9) comprises external longitudinal bars (93) and internal transversal bars (91) perpendicularly arranged between said external longitudinal bars (93)
**characterised in that** at least first supports (12) to which said movable slices (22) are connected are arranged at the end of said external longitudinal bars (93) of said removal system and solidly join said movable slices (22) to said removal system (9) **and in that** said movable slices (22) rest on said puncher (2).

2. A mould (3) according to claim 1, wherein said internal transversal bars (91) and said external longitudinal bars (93) are conveniently assembled and connected to each other, for instance through screws (23) or other known means.

3. A mould (3) according to claim 1 or 2, wherein the side of said puncher (2) has an angle of inclination (θ) relative to the moulding direction (Z), which is also the opening and closing direction of the mould (3), said angle (θ) having a value ranging from 10° to 20°.

4. A mould (3) according to claim 3, wherein said movable slices (22) are connected to the side of the puncher (2) through first T-shaped guides (10).

5. A mould (3) according to claim 4, wherein said first T-shaped guides (10) are inclined at an angle lower of 0° and 5°, preferably of 1°, than the angle (θ) of the side of the puncher (2).

6. A mould (3) according to claim 1, wherein said movable parts of said puncher (2) further include one or more insertions superimposed and/or laterally arranged relative to said movable slices (22), or upper sliders (24).

7. A mould (3) according to claim 6, wherein second supports (32) to which said upper sliders (24) are connected are arranged at the ends of said external longitudinal bars (93) of said removal system and solidly join said upper sliders (24) to said removal system (9).

8. Moulding apparatus (1) comprising a mould (3) according to any of the preceding claims from 1 to 7.

## Patentansprüche

1. Formwerkzeug (3) umfassend:
- eine Patrize (2),
- eine Matrize (4),
wobei die Patrize (2) und die Matrize (4) entlang einer Formrichtung (Z) aufeinander zu / voneinander weg so beweglich sind, um das Formwerkzeug (3) zu schließen / öffnen,
wobei die Patrize (2) und die Matrize (4) Flächen aufweisen, die so angeformt sind, dass sie, wenn sie miteinander gekoppelt sind, einen Hohlraum (5) bilden, der die Gestalt des zu formenden, in der Folge geformten, Werkstücks (7) hat, und
- eine Auswerfanordnung (9), wobei diese Auswerfanordnung entlang der Formrichtung (Z) gleitend verschiebbar ist,
wobei die Patrize (2) bewegliche Teile aufweist, die mindestens Einsätze in dem mittleren Abschnitt der Patrize, oder bewegliche Scheiben (22), umfassen, wobei die Auswerfanordnung (9) äußere Längsstege (93) und senkrecht zu diesen äußeren Längsstegen (93) angeordnete innere Querstege (91) umfasst,
**dadurch gekennzeichnet, dass** mindestens erste Halter (12), mit denen die beweglichen Scheiben (22) verbunden sind, am Ende der äußeren Längsstege (93) der Auswerfanordnung angeordnet sind und die die beweglichen Scheiben (22) fest mit der Auswerfanordnung (9) verbinden **und dass** die beweglichen Scheiben (22) auf der Patrize (2) liegen.

2. Formwerkzeug (3) nach Anspruch 1, wobei die inneren Querstege (91) und die äußeren Längsstege (93) in geeigneter Weise zusammengefügt und miteinander verbunden werden, beispielweise mittels Schrauben (23) oder anderer bekannter Mittel.

3. Formwerkzeug (3) nach Anspruch 1 oder 2, wobei der Schenkel der Patrize (2) um einen Winkel (θ) relativ zu der Formrichtung (Z), die auch die Öffnungs- und Schließrichtung des Formwerkzeugs (3) darstellt, geneigt ist, wobei dieser Winkel (θ) einen Wert zwischen 10° und 20° hat.

4. Formwerkzeug (3) nach Anspruch 3, wobei die beweglichen Scheiben (22) mittels erster T-förmiger Führungen (10) mit dem Schenkel der Patrize (2) verbunden sind.

5. Formwerkzeug (3) nach Anspruch 4, wobei die ersten T-förmigen Führungen (10) eine Neigung besitzen, die um einen zwischen 0° und 5° variablen Winkel, vorzugsweise um einen Winkel von 1°, kleiner ist als der Winkel (θ) des Schenkels der Patrize (2).

6. Formwerkzeug (3) nach Anspruch 1, wobei die beweglichen Teile der Patrize (2) weiter einen oder mehrere Einsätze, oder obere Schieber (24), umfassen, die relativ zu den beweglichen Scheiben (22) überlagernd und/oder seitlich angeordnet sind.

7. Formwerkzeug (3) nach Anspruch 6, wobei zweite Halter (32), mit denen die oberen Schieber (24) verbunden sind, an den Enden der äußeren Längsstege (93) der Auswerfanordnung angeordnet sind und die die oberen Schieber (24) fest mit der Auswerfanordnung (9) verbinden.

8. Formvorrichtung (1) umfassend ein Formwerkzeug (3) nach irgendeinem der vorhergehenden Ansprüche 1 bis 7.

## Revendications

1. Moule (3) comprenant:
- un poinçon (2),
- une matrice (4),
ce poinçon (2) et cette matrice (4) étant déplaçables l'un vers / loin de l'autre le long d'une direction de moulage (Z) de manière à fermer / ouvrir ce moule (3),
ce poinçon (2) et cette matrice (4) comportant des surfaces ayant une forme telle qu'elles forment, lorsqu'elles sont couplées, une cavité (5) ayant la forme de l'élément qui doit être moulé, dans la suite élément moulé, (7), et
- un système d'éjection (9), ce système d'éjection étant déplaçable par glissement le long de cette direction de moulage (Z),
dans lequel ce poinçon (2) comporte des parties mobiles, qui comprennent au moins des pièces intercalaires dans la portion médiane du poinçon, ou tranches mobiles (22),
dans lequel ce système d'éjection (9) comporte des barres longitudinales externes (93) et des barres transversales internes (91) disposées perpendiculairement à ces barres longitudinales externes (93),
**caractérisé en ce que** au moins des premiers supports, auxquels ces tranches mobiles (22) sont reliées, sont disposés à l'extrémité de ces barres longitudinales externes (93) de ce système d'éjection et ils relient solidairement ces tranches mobiles (22) à ce système d'éjection (9) **et en ce que** ces tranches mobiles (22) appuient sur ce poinçon (2).

2. Moule (3) selon la revendication 1, dans lequel lesdites barres transversales internes (91) et lesdites barres longitudinales externes (93) sont assemblées et connectées mutuellement de manière adéquate, par exemple par des vis (23) ou par d'autres moyens connus.

3. Moule (3) selon la revendication 1 ou 2, dans lequel le côté de ce poinçon (2) présente un angle d'inclinaison (θ) par rapport à la direction de moulage (Z), qui est aussi la direction d'ouverture et de fermeture du moule (3), ledit angle (θ) ayant une valeur comprise entre 10° et 20°.

4. Moule (3) selon la revendication 3, dans lequel ces tranches mobiles (22) sont reliées au côté de ce poinçon (2) par des premiers guides en forme de T (10).

5. Moule (3) selon la revendication 4, dans lequel ces premiers guides en forme de T (10) sont inclinés d'un angle qui est inférieur de 1° à 5°, de préférence de 1°, à l'angle (θ) du côté de ce poinçon (2).

6. Moule (3) selon la revendication 1, dans lequel ces parties mobiles de ce poinçon (2) comprennent en outre une ou plusieurs pièces intercalaires superposées et/ou disposées latéralement par rapport à ces tranches mobiles (22), ou coulisseaux supérieurs (24).

7. Moule (3) selon la revendication 6, dans lequel des deuxièmes supports, auxquels ces coulisseaux supérieurs (24) sont reliés, sont disposés à l'extrémité de ces barres longitudinales externes (93) de ce système d'éjection et ils relient solidairement ces coulisseaux supérieurs (24) à ce système d'éjection (9).

8. Dispositif de moulage (1) comprenant un moule (3) selon l'une quelconque des revendications précédentes de 1 à 7.
